# FASCICULE DE BREVET EUROPEEN

(11) **EP 0 802 226 B1**
(45) Date de publication et mention de la délivrance du brevet: **24.11.2004**
(21) Numéro de dépôt: 97400755.1
(22) Date de dépôt: 02.04.1997
(51) Int. Cl.: C08L 77/00, C08L 77/02, C08L 77/06

(54) **Pièces injectées en polyamide et résistantes aux chocs**
Schlagbeständige Polyamid-Spritzgussgegenstände
Impact-resistant injection-moulded polyamide articles

(30) Priorité: 16.04.1996 FR 9604718
(43) Date de publication de la demande: 22.10.1997
(73) Titulaire: Atofina, 92800 Puteaux (FR)
(72) Inventeur: Perret, Patrice M., 27470 Serquigny (FR); Bouilloux, Alain M., 27300 Bernay (FR)
(74) Mandataire: Neel, Henry

(56) Documents cités:
- EP-A- 0 564 338

## Description

La présente invention concerne des pièces injectées à base de résine polyamide (A) et d'au moins un copolymère (B) de l'éthylène et d'un époxyde insaturé, le copolymère (B) étant obtenu par copolymérisation ou par greffage de l'époxyde et représentant de 10 à 20% en poids de (A) + (B) caractérisé en ce que (B) est un copolymère éthylène/(méth)acrylate d'alkyle/époxyde insaturé contenant 30% en poids de (méth)acrylate d'alkyle sous forme d'acrylate de butyle et 2% en poids d'époxyde insaturé sous forme de méthacrylate de glycidyle (GMA).

L'amélioration de la résistance aux chocs des polyamides est obtenue généralement par incorporation sous forme d'une phase dispersée d'un modifiant choc qui présente un caractère élastomérique et de fonctions réactives (acide acrylique, anhydride maléique) susceptibles de réagir avec des groupements fonctionnels de la matrice polyamide. Cette réactivité permet d'assurer une dispersion fine et homogène de l'élastomère, une bonne adhésion à l'interface nodule matrice mais conduit à une baisse importante de la fluidité. Cette forte évolution de la viscosité est nuisible à la mise en oeuvre, spécialement pour les pièces injectées fines ou de grandes dimensions.

La demanderesse a découvert qu'en utilisant des compositions à base de résine polyamide et d'au moins un copolymère de l'éthylène et d'un époxyde insaturé, le copolymère (B) étant obtenu par copolymérisation ou par greffage de l'époxide, et représentant de 10 à 20% en poids de (A) + (B) caractérisé en ce que (B) est un copolymère éthylène/(méth)acrylate d'alkyle/époxyde insaturé contenant 30% en poids de (méth)acrylate d'alkyle sous forme d'acrylate de butyle et 2% en poids d'époxyde insaturé sous forme de méthacrylate de glycidyle (GMA) on pouvait obtenir à la fois une résistance au choc et une bonne fluidité permettant l'injection de ces compositions.

L'art antérieur a déjà décrit des compositions résistantes au choc à base de polyamide.

EP 96 264 décrit des polyamides de viscosité relative comprise entre 2,5 et 5 renforcés par des copolymères éthylène/(méth)acrylate d'alkyle en C₂ à C₈/acide ou anhydride insaturé et comprenant 20 à 40% en poids d'acrylate.

EP 2 761 décrit des polyamides renforcés par des polyéthylènes ou des copolymères d'éthylène greffés par de l'acide (méth)acrylique, ses dérivés ou de l'anhydride maléique et éventuellement du polyéthylène.

EP 52 796 décrit des polyamides renforcés par (i) un copolymère alpha-oléfine/acide carboxylique insaturé, (ii) un copolymère alphaoléfine ester d'alkyle d'acide carboxylique insaturé et (iii) un composé métallique.

FR 2 292 016 décrit des polyamides renforcés par un mélange de copolymères d'alphaoléfines et d'esters d'acides carboxyliques insaturés ou leurs dérivés.

US 5 070 145 décrit des polyamides renforcés par un mélange (i) d'un polyéthylène ou d'un copolymère éthylène/(méth)acrylate d'alkyle et (ii) d'un copolymère éthylène/(méth)acrylate d'alkyle/anhydride maléique.

US 4 174 358 décrit des polyamides renforcés se présentant sous la forme d'une matrice de polyamide dans laquelle sont dispersés des nodules inférieurs à 1 µm ayant un certain module, devant être aussi une fraction du module du polyamide. De très nombreux renforçants sont décrits, quelques-uns ayant des fonctions époxyde. La plupart sont des polymères ayant des fonctions acides ou anhydrides neutralisées ou sont des mélanges à base d'EPDM. Les polymères à fonctions époxydes ne sont pas exemplifiés. Tous ces renforçants sont présentés comme équivalents.

Tout cet art antérieur n'a exemplifié que des renforçants ayant des fonctions acides ou anhydride d'acide ou des EPDM, et il n'est fait aucune mention de la viscosité des polyamides renforcés. On verra dans les exemples comparatifs de la présente invention que le comportement des modifiants de l'art antérieur n'a rien à voir avec ceux de la présente invention.

EP 564 338 décrit des polyamides renforcés (i) par des copolymères éthylène/(méth)acrylate d'alkyle/méthacrylate de glycidyle et (ii) éventuellement par des polyéthylènes, des copolymères éthylène/(méth)acrylate d'alkyle ou des copolymères éthylène/(méth)acrylate d'alkyle/anhydride d'acide dicarboxylique insaturé. L'example 8 décrit une composition à base de 80% en poids de PA 66 et 20% en poids d'un terpolymère comprenant 25% en poids d'acrylate d'éthyle, 8% en poids de méthacrylate de glycidyle et 67% en poids d'éthylène. Cet art antérieur ne s'intéresse qu'à la résistance au choc et pas à la viscosité. Il est clair d'après le tableau des exemples (exemple 6) qu'on a intérêt à mélanger un renforçant ayant des fonctions époxydes avec un renforçant ayant des fonctions anhydride pour provoquer une réticulation de la phase dispersée, ce qui donne de remarquables résistances au choc mais au détriment de la viscosité. Les essais ont été faits sur des éprouvettes de dimensions 4x10x80 mm³ moulées par injection.

Il est clair que sur de telles dimensions et dans des conditions de laboratoire, la viscosité est sans importance.

Il en est tout autrement pour les pièces fines ou de plus grandes dimensions ou encore de forme compliquée, ces pièces devant être produites à des cadences industrielles.

L'avantage des compositions de l'invention est le compromis entre la résistance au choc et la viscosité. Un autre avantage est qu'il suffit d'ajouter un seul produit dans la résine polyamide et non un mélange de différents produits. Un autre avantage est qu'il suffit d'ajouter le copolymère d'éthylène et d'un époxyde insaturé dans l'extrudeuse qui alimente le dispositif d'injection. Cet ajout peut être fait par une extrudeuse latérale ou un doseur de granulés sur l'extrudeuse de polyamide. Il n'est donc pas nécessaire de préparer à l'avance le mélange de la résine polyamide et du renforçant choc.

La présente invention concerne donc des pièces injectées à base de résine polyamide (A) et d'au moins un copolymère (B) de l'éthylène et d'un époxyde insaturé telles que définies plus haut et les compositions utilisées pour fabriquer ces pièces injectées.

On entend par polyamide les produits de condensation :
- d'un ou plusieurs aminoacides, tels les acides aminocaproïque, amino-7-heptanoïque, amino-11-undécanoïque et amino-12-dodécanoïque d'un ou plusieurs lactames tels que caprolactame, oenantholactame et lauryllactame ;
- d'un ou plusieurs sels ou mélanges de diamines telles l'hexaméthylène-diamine, la dodécaméthylènediamine, la métaxylylènediamine, le bis-p aminocyclohexylméthane et la triméthylhexaméthylène diamine avec des diacides tels que les acides isophtalique, téréphtalique, adipique, azélaïque, subérique, sébacique et dodécanedicarboxylique
ou des mélanges de certains de ces monomères ce qui conduit à des copolyamides.

Par exemple, la condensation du caprolactame et du lauryllactame produit le PA-6/12. L'invention concerne avantageusement le PA-6 (polycaprolactame), le PA-6,6 (polyhexaméthylène adipamide), le PA-11 (acide polyaminoundécanoïque), le PA-12 (polylauryllactame) et le PA-6/12. Elle est plus particulièrement utile pour les PA-6 et PA-6,6.

Le copolymère de l'éthylène et d'un époxyde insaturé peut être obtenu par copolymérisation de l'éthylène et d'un époxyde insaturé ou par greffage de l'époxyde insaturé sur le polyéthylène. Le greffage peut être effectué en phase solvant ou sur le polyéthylène en fusion en présence d'un peroxyde. Ces techniques de greffage sont connues en elles-mêmes. Quant à la copolymérisation de l'éthylène et d'un époxyde insaturé, on peut utiliser les procédés dits de polymérisation radicalaire fonctionnant habituellement à des pressions entre 200 et 2 500 bars.

Le copolymère d'éthylène et d'époxyde insaturé peut comprendre aussi d'autres monomères pouvant être choisis par exemple parmi :
- les alphaoléfines telles que le propylène, le butène-1, l'hexène
- les esters vinyliques d'acides carboxyliques saturés tels que l'acétate de vinyle ou le propionate de vinyle
- les esters d'acides carboxyliques insaturés tels que les (méth)acrylates d'alkyle pouvant avoir jusqu'à 24 carbones.

A titre d'exempte, on peut greffer l'époxyde insaturé sur les polymères suivants :
- le polyéthylène, les copolymères de l'éthylène et d'une alphaoléfine, les polyéthylènes tels que le VLDPE (PE très basse densité), le ULDPE (PE ultra basse densité) ou le PE métallocène ;
- les copolymères de l'éthylène et au moins un ester vinylique d'acide carboxylique saturé tel que l'acétate de vinyle ou le propionate de vinyle ;
- les copolymères de l'éthylène et d'au moins un ester d'acide carboxylique insaturé, tel que les (méth)acrylates d'alkyle pouvant avoir jusqu'à 24 carbones ;
- les élastomères EPR (éthylène/propylène rubber) ou les EPDM (éthylène/propylène/diène) ;
- des mélanges de polymères choisis parmi les précédents.

La quantité de copolymère (B) peut varier dans de larges limites selon les propriétés qu'on demande au mélange de (A) et (B), des quantités entre 10 et 20% en poids de (A)+(B) sont cependant suffisantes.

La demanderesse a découvert qu'à teneur identique en époxyde et en faisant varier la quantité de copolymère (B) de 10 à 20% le gain obtenu au-delà de 15% était beaucoup plus faible que le gain obtenu quand on passe de 10 à 15% alors que l'indice de fluidité chutait fortement.

La demanderesse a aussi découvert qu'à quantité de copolymère (B) constante, la résistance au choc n'était absolument pas proportionnelle à la quantité d'époxyde dans le copolymère (B).

La quantité d'époxyde du copolymère (B) est de 2% en poids de (B).

La présente invention concerne donc aussi des compositions de résine polyamide résistant au choc comprenant un polyamide (A) et une quantité de copolymère (B) telle que leur indice de fluidité (MFi) est supérieur au rapport de l'indice de fluidité du polyamide (A) sur 0,175 fois le pourcentage en poids du copolymère (B) [MFi _{(A + B)} > MFI (A) / 0,175 x % (B) ]

L'indice de fluidité de ces résines (A) comprenant (B) est aussi inférieure à l'indice de fluidité du polyamide (A).

Par exemple, on ajoute 15 % en poids de (B) dans un PA-6 de MFi 21, le MFi du PA-6 comprenant 15 % de (B) est supérieur à 21 / (0,175 x 15) = 8

La présente invention concerne aussi des compositions de résine polyamide résistant au choc comprenant un polyamide (A) et une quantité suffisante de copolymère (B) pour que la résistance au choc CHARPY à -40°C soit de 3 à 6 fois celle du polyamide (A) seul, la quantité d'époxyde dans le copolymère (B) étant telle que l'indice de fluidité de ces compositions (A)+(B) est supérieur au rapport de l'indice de fluidité de (A) seul sur 0,175 fois le pourcentage en poids du copolymère (B).

L'époxyde est avantageusement le (méth)acrylate de glycidyle.

Avantageusement le (méth)acrylate d'alkyle est choisi parmi l'acrylate de n-butyle,

Ce copolymère peut être obtenu par polymérisation radicalaire des monomères.

On ne sortirait pas du cadre de l'invention en ajoutant des charges minérales (talc, Ca₃CO, kaolin), des renforts (fibre de verre, fibre minérale, fibre de carbone), des stabilisants (thermique, UV), des agents ignifugeants et des colorants.

Les compositions de l'invention se préparent par les techniques habituelles des thermoplastiques telles que par exemple l'extrusion ou les mélangeurs bivis.

### EXEMPLES

Réalisation des essais

### - Compoundage

Les compositions sont obtenues par compoundage sur une extrudeuse double vis WERNER 40, UD 40 munie d'un système de dégazage et d'une coupe à jonc, avec un débit de 40 kg/h et une vitesse de 150 tours/mn. Les profils de températures utilisés sont les suivants :

| | |
|---|---|
| Base PA 6 | 240/240/240/240°C |
| Base PA 6 6 | 260/265/265/265°C |

Les composants en granulés sont mélangés à sec puis introduits dans la trémie d'alimentation.

### - Moulage des échantillons

Les granulés sont séchés sous pression réduite à une température de 80°C puis sont moulés par injection sur une presse à injecter type Krauss Maffei B1 (60 T de fermeture) dans les conditions suivantes :
- Base PA 6: - Température matière 240 - 260°C, moule 50°C
- Pression d'injection 45 bars
- Base PA 6 6: - Température matière 260 - 280°C, moule 80°C
- Pression d'injection 70 bars.

Les éprouvettes normalisées (80 x 10 x 4 mm³) ainsi obtenues sont conditionnées pendant 14 jours à 23°C et 50% d'humidité relative.

### Evaluation

- Module de flexion selon la norme ISO 178
- Résistance aux chocs sur des éprouvettes préalablement entaillées du type CHARPY selon la norme ISO 179-82 et du type IZOD selon la norme ISO 180, à différentes températures (23°C, -20°C, -40°C). Lorsque la fissure parcourt moins de 90% de l'épaisseur en fond d'entaille de l'échantillon, aucune valeur ne peut être déterminée et la référence N.B. (No Break) est signalée.
- Indice de fluidité MFI selon la norme ISO 1133 sous un poids de 2,16 kg et à des températures de 235°C et 275°C pour les compositions à base respectivement de PA 6 et PA 6 6.

### Matières Premières

Les polyamides testés sont les polyamides 6 et 6 6 respectivement commercialisés par la société BASF sous les références Ultramid® B 3 et A 3.

Les terpolymères testés sont :
TERPO 1 Terpolymère Ethylène / Acrylate d'Ethyle / Anhydride maléique
   68,5 / 30 / 1,5% en poids, MFI (190°C, 2,16 kg) = 7
TERPO 2 Terpolymère Ethylène / Acrylate d'Ethyle / Anhydride maléique
   64,1/35/0,9% en poids, MFI (190°C, 2,16 kg) = 7
TERPO 3 Terpolymère Ethylène / Acrylate de Butyle / Anhydride maléique
   68,5/30/1,5% en poids, MFI (190°C, 2,16 kg) = 5
TERPO 4 Terpolymère Ethylène / Acrylate d'Ethyle / GMA
   68 / 24 / 8% en poids, MFI (190°C, 2,16 kg) = 6
   (GMA désigne le méthacrylate de glycidyle)
TERPO 5 rerpolymère Ethylène / Acrylate de butyle / GMA
   68/30/2% en poids, MFI (190°C, 2,16 kg) = 6

Les résultats obtenus avec les différentes compositions sur base PA-6,6 et PA-6 sont regroupés dans les tableaux 1 et 2.

### Exemples 10, 11 et 21, 22 examples 11 et 22 selon l'invention Influence de la nature du modifiant type E / Ester acrylique / GMA dans des compositions à base respectivement de PA 66 et PA 6.

La réduction de la teneur en GMA au sein du Terpo 5 (2% GMA) permet de conserver de bonnes résistances aux chocs tout en améliorant la fluidité des compositions (ex 11 et 22 par rapport aux ex 10 et 21), d'où un meilleur compromis résistance aux chocs / fluidité.

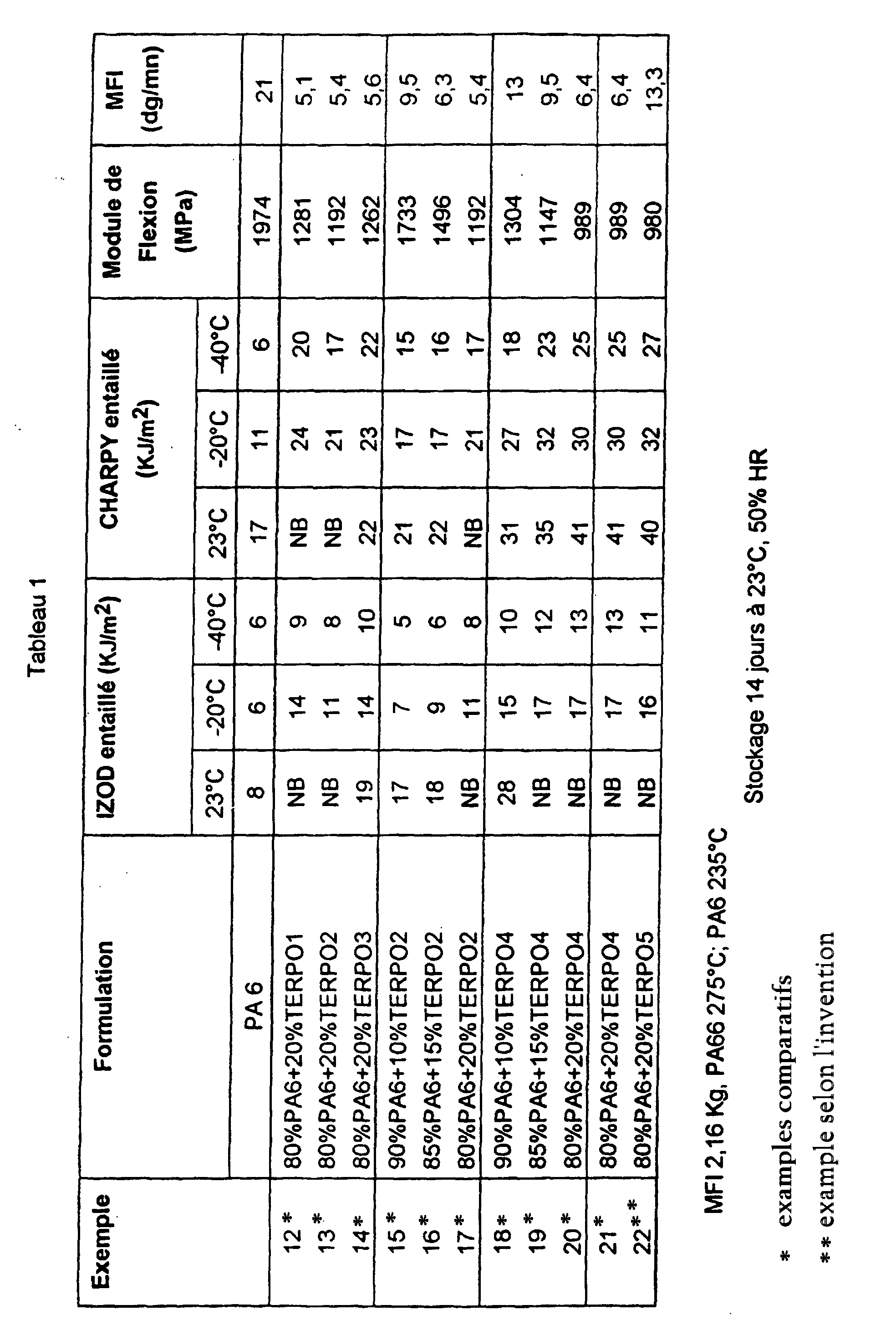

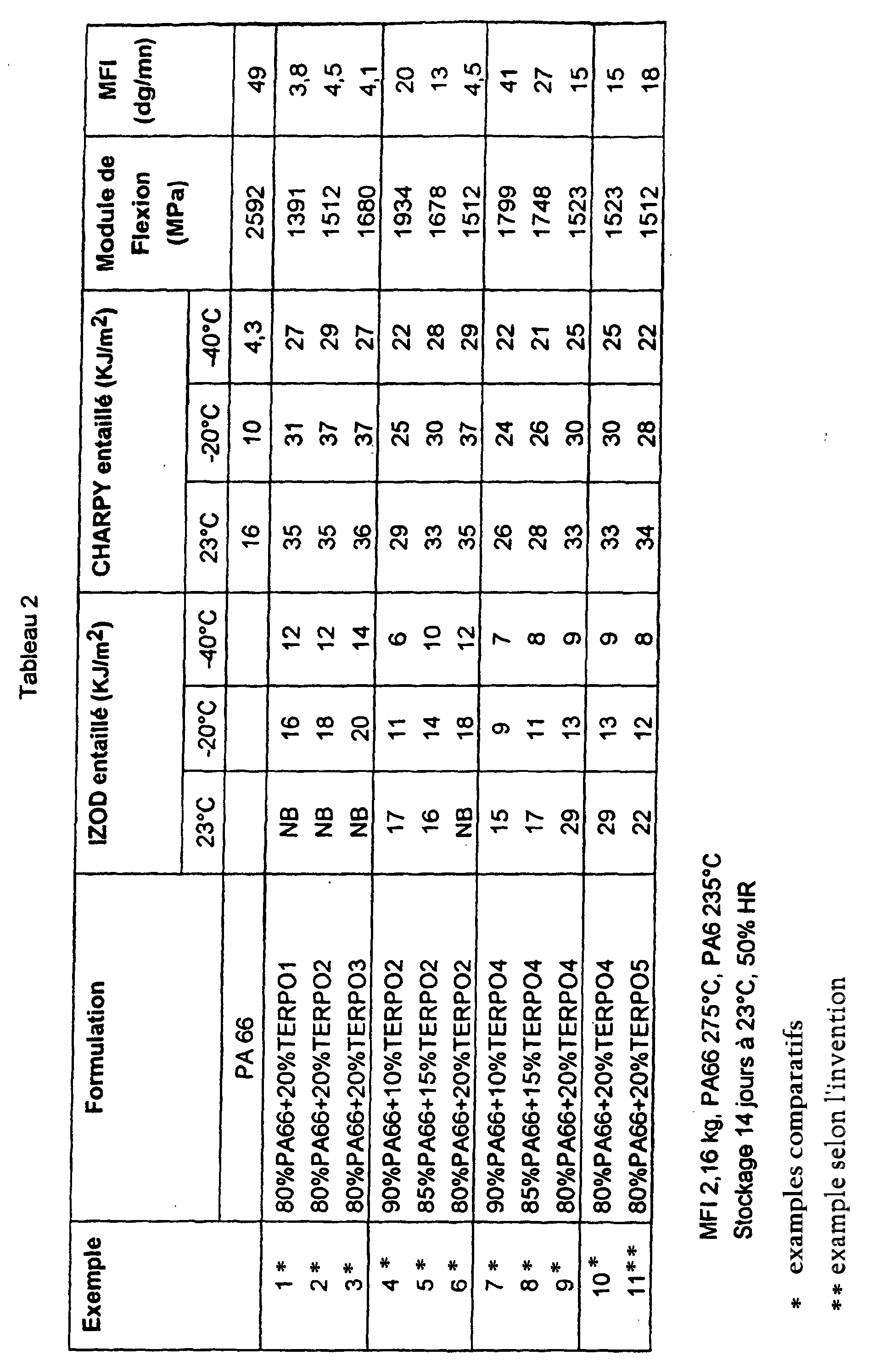

## Revendications

1. Compositions de résine polyamide résistant aux chocs et présentant un compromis résistance aux chocs /fluidité nettement amélioré, comprenant un polyamide (A) et un copolymère (B) de l'éthylène et d'un époxyde insaturé, obtenu par copolymérisation ou par greffage de l'époxyde, ledit polymère (B) représentant de 10 à 20 % en poids de (A) + (B), **caractérisées en ce que** (B) est un copolymère éthylène/ (méth)acrylate d'alkyle/époxyde insaturé contenant 30% en poids de (méth)acrylate d'alkyle sous forme d'acrylate de butyle et 2% en poids d'époxyde insaturé sous forme de méthacrylate de glycidyle (GMA).

2. Compositions de résine polyamide selon la revendication 1, **caractérisées en ce que** leur indice de fluidité (MFI) est supérieur au rapport de l'indice de fluidité du polyamide (A) sur 0,175 fois le pourcentage poids du copolymère (B).

3. Compositions de résine polyamide selon l'une des revendications 1 et 2, **caractérisées en ce que** leur résistance au choc CHARPY à -40°C est de 3 à 6 fois celle du polyamide (A) seul.

4. Compositions de résine polyamide selon l'une des revendications précédentes, **caractérisées en ce que** le polyamide (A) est choisi parmi le PA-6 (polycaprolactame) et le PA-6,6 (polyhexaméthylène adipamide).

5. Pièces injectées obtenues à partir des compositions selon l'une des revendications précédentes.

## Claims

1. Impact-resistant polyamide resin compositions exhibiting a substantially improved impact strength/melt flow compromise, comprising a polyamide (A) and an ethylene/unsaturated epoxide copolymer (B), obtained by copolymerisation or by grafting of the epoxide, the said polymer (B) representing from 10 to 20% by weight of (A) + (B), which compositions are **characterized in that** (B) is an ethylene/alkyl (meth)acrylate/ unsaturated epoxide copolymer containing 30 wt% alkyl(meth)acrylate in the form of butyl acrylate and 2 wt% unsaturated epoxide in the form of glycidyl methacrylate (GMA).

2. Polyamide resin compositions according to Claim 1, **characterized in that** their melt flow index (MFI) is greater than the ratio of the melt flow index of the polyamide (A) to 0.175 times the weight percentage of the copolymer (B).

3. Polyamide resin compositions according to either of Claims 1 and 2, **characterized in that** their Charpy impact strength at -40°C is 3 to 6 times that of the polyamide (A) alone.

4. Polyamide resin compositions according to one of the preceding claims, **characterized in that** the polyamide (A) is chosen from PA-6(polycaprolactam) and PA-6,6(polyhexamethylene adipamide).

5. Injection-moulded parts obtained from the compositions according to one of the preceding claims.

## Patentansprüche

1. Schlagzähe Polyamidharzzusammensetzungen mit wesentlich verbessertem Kompromiß zwischen Schlagzähigkeit und Fließfähigkeit, enthaltend ein Polyamid (A) und ein Ethylen und ein ungesättigtes Epoxid enthaltendes, durch Copolymerisation oder Pfropfung des Epoxids erhaltenes Copolymer (B), welches 10 bis 20 Gew.-% von (A) + (B) ausmacht, **dadurch gekennzeichnet, daß** es sich bei (B) um ein Copolymer von Ethylen, Alkyl(meth)acrylat und ungesättigtem Epoxid mit 30 Gew.-% Alkyl(meth)-acrylat in Form von Butylacrylat und 2 Gew.-% ungesättigtes Epoxid in Form von Glycidylmethacrylat (GMA) handelt.

2. Polyamidharzzusammensetzungen nach Anspruch 1, **dadurch gekennzeichnet, daß** ihr Schmelzflußindex (MFI) größer ist als der Quotient aus dem Schmelzflußindex des Polyamids (A) und dem 0,175-fachen des Gewichtsprozentanteils des Copolymers (B).

3. Polyamidharzzusammensetzungen nach Anspruch 1 oder 2, **dadurch gekennzeichnet, daß** ihre Charpy-Schlagzähigkeit bei -40°C 3- bis 6-mal so groß ist wie diejenige des Polyamids (A) alleine.

4. Polyamidharzzusammensetzungen nach einem der vorhergehenden Ansprüche, **dadurch gekennzeichnet, daß** das Polyamid (A) unter PA-6 (Polycaprolactam) und PA-6,6 (Polyhexamethylenadipamid) ausgewählt ist.

5. Aus den Zusammensetzungen nach einem der vorhergehenden Ansprüche erhaltene Spritzgußteile.
